## Europäisches Patentamt
## European Patent Office
## Office européen des brevets

(19)

(11) Publication number: **0 169 697**
**B1**

(12) # EUROPEAN PATENT SPECIFICATION

(45) Date of publication of patent specification: **18.05.88**

(51) Int. Cl.⁴: **F 16 B 5/00**, F 16 B 12/00

(21) Application number: **85305024.3**

(22) Date of filing: **15.07.85**

(54) Jointing system.

(30) Priority: **24.07.84 GB 8418805**

(43) Date of publication of application:
**29.01.86 Bulletin 86/05**

(45) Publication of the grant of the patent:
**18.05.88 Bulletin 88/20**

(84) Designated Contracting States:
**BE DE FR GB LU NL**

(56) References cited:
**DD-A- 129 574**
**DD-B- 158 487**
**US-A-4 126 364**

(73) Proprietor: **PROJECT OFFICE FURNITURE LIMITED**
**Hamlet Green Haverhill**
**Suffolk CB9 8QJ (GB)**

(72) Inventor: **Steel, Robert John**
**The Old Rectory Barnardiston**
**Haverhill Suffolk CB9 7TL (GB)**
Inventor: **Baillie, Leslie Russell Lee**
**Clare House Greys Close**
**Cavendish Sudbury Suffolk CO10 8BT (GB)**

(74) Representative: **Pattullo, Norman et al**
**Ian G. Murgitroyd and Company Mitchell House**
**333 Bath Street**
**Glasgow G2 4ER Scotland (GB)**

Courier Press, Leamington Spa, England.

EP 0 169 697 B1

## Description

This invention relates to a jointing system for use in connecting panels and other furniture members.

The use of free standing panels as room or office dividers is well known. Various types of jointing systems have previously been proposed for connecting adjacent panels to one another. Previously proposed systems have had a number of disadvantages. The panel joining members are often large and unsightly and often leave gaps between adjacent panels. As the panels are slightly spaced apart in this way it is often difficult to calculate the length of panels required to extend completely between two walls.

According to the present invention there is provided a jointing system having first and second panels each of which has along an end portion an elongate recess of non-uniform cross-section which has a width greater in its interior than at its opening, the recess being offset from the longitudinal central plane of the panel, and first and second connecting members mounted one on each panel by way of a first portion of the connecting member being retained in the corresponding recess by the non-uniformity of the recess, a second portion of the first connecting member being pivotally engageable with a corresponding portion of the second connecting member.

Preferably, the longitudinal central plane of each recess is disposed at an angle to the longitudinal central plane of the respective panel.

Most preferably, the longitudinal central plane of the recess is disposed at an angle to the longitudinal central plane of the respective panel in the range 30 to 60 degrees.

Preferably also, two recesses are provided in said end portion of each panel.

Most preferably, the two recesses in said end portion of the panel are arranged one on either side of the longitudinal central plane of the panel, the longitudinal central plane of each recess being arranged at an angle of 45 degrees to the longitudinal central plane of the panel.

Preferably also, the first portion of each of the connecting members is T-shaped in cross section and the second portion of each of the connecting members is circular in cross-section.

Preferably also, the first and second connecting members pivotally engage by means of a complementary recess in the first connecting member and protrusion on the second connecting member.

Most preferably, the protrusion on the second connecting member is formed by an intermediate member having a protrusion at each end being engaged with a recess in said second connecting member.

Alternatively, the recess in the first connecting member is formed by an intermediate member having a recess in each end and engaging with a protrusion on said first connecting member.

Preferably also, the connecting members engage one with another such that a hinge is formed between the panels allowing the panels to be pivoted relative to one another between a first position in which the panels are in end to end abutment and a second position wherein a desired angle is formed between them.

Embodiments of the present invention will now be described, by way of example, with reference to the accompanying drawings, in which:

Fig. 1 is an exploded perspective view of a jointing system of this invention;

Fig. 2 is an exploded perspective view, with the connecting members omitted for clarity, of a series of panels of different heights to be interconnected by the system of this invention;

Figs. 3, 4 and 5 are plan views of examples of the jointing system of the invention applied to two, three and four panel junctions respectively; and

Fig. 6 is an exploded view of a second embodiment of connecting members of a jointing system of this invention.

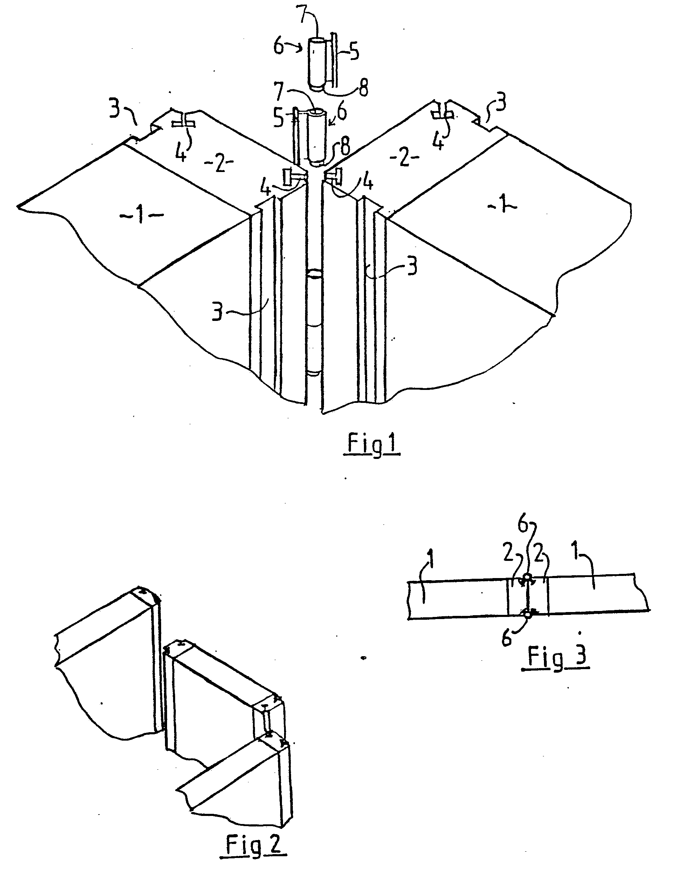

Referring to the drawings, Fig. 1 shows a pair of office partitioning panels 1 to be interconnected. Each panel 1 has at its end a plastics extrusion 2 having a channel 3 of rectangular cross-section in each side face, and two recesses 4 angled at 45 degrees to the central plane of the panel, so that the recesses 4 are at 90 degrees to each other. The channels 3 and recesses 4 extend along the length of the extrusion 2.

The recesses 4 are T shaped in cross-section.

A pair of elongate cylindrical connectors 6 each have a T-shaped extension 5 which fits snugly within the recesses 4 of adjacent panels, being slidable into position and retained against lateral withdrawal by each T-shaped extension 5 of the connectors 6 engaging with the corresponding recess. The cylindrical portion of each connector 6 has a female connection 7 at one end and a complementary male connection 8 at the other end.

The male connection 8 on the connector 6 on the first panel engages with the female connection 7 on the connector 6 on the second panel. Thus the connectors 6 form a hinge which holds the panels 1 together and being rotatable relative to one another allow the angle between the panels to be altered.

A series of connectors 6 can be used to join adjacent panels 1 with the connectors 6 arranged along the length of the panels 1 and alternately engaging one panel 1 or the other as shown in Fig. 1.

The connectors 6 form a hinge which has its axis midway between the panels 1 thus ensuring that the spacing between a series of panels joined in this way is constant.

As shown in Fig. 2, panels of different height can be easily and effectively joined together using the present system as the connectors 6 can be simply slid into position at any height in the corresponding recesses 4.

Figs. 3, 4 and 5 show further uses of the system in joining two, three and four panels together respectively, thus demonstrating the flexibility of the system.

The channels 3 can be used for sliding and locking accessories on the partitioning or may be slotted for hanging accessories from the channel walls. The connectors 6 and extrusions 2 can be modular to allow connection between different panels 1 as required.

The channels 3 can also be used to lock in capping strips at the corners between panels, and a top cap can also be added to give the joint rigidity and to hold the connectors 6 in their recesses.

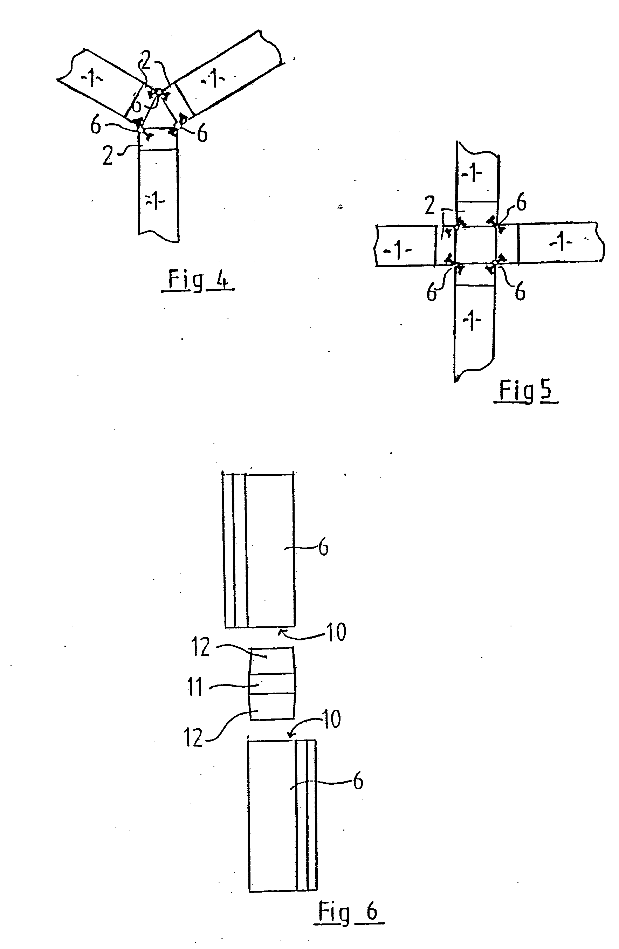

In a further embodiment illustrated in Fig. 6 the connectors 6 are hollow thus forming a recess 10 at each end. A separate intermediate member 11, having a protrusion 12 at each end, is provided to link two connectors 6. Alternatively, the connector 6 may be solid but provided with a recess at each end.

Alternatively, the connectors 6 may have a protrusion at each end and an intermediate member having a recess at each end may be provided.

In addition to the joining of panels by way of this system other items of furniture may be similarly connected.

## Claims

1. A jointing system having first and second panels each of which has along an end portion an elongate recess of non-uniform cross-section which has a width greater in its interior than at its opening, the recess being offset from the longitudinal central plane of the panel, and first and second connecting members mounted one on each panel by way of a first portion of the connecting member being retained in the corresponding recess by the non-uniformity of the recess, a second portion of the first connecting member being pivotally engageable with a corresponding portion of the second connecting member.

2. A jointing system as claimed in Claim 1, wherein the longitudinal central plane of each recess is disposed at an angle to the longitudinal central plane of the respective panel.

3. A jointing system as claimed in Claim 2, wherein the longitudinal central plane of each recess is disposed at an angle to the longitudinal central plane of the respective panel in the range 30 to 60 degrees.

4. A jointing system as claimed in Claim 3, wherein two recesses are provided in said end portion of each panel.

5. A jointing system as claimed in Claim 4, wherein the two recesses in said end portion of the panel are arranged one on either side of the longitudinal central plane of the panel, the longitudinal central plane of each recess being arranged at an angle of 45 degrees to the longitudinal central plane of the panel.

6. A jointing system as claimed in any one of the preceding Claims, wherein the first portion of each of the connecting members is T-shaped in cross section and the second portion of each of the connecting members is circular in cross-section.

7. A jointing system as claimed in any one of the preceding Claims, wherein the first and second connecting members pivotally engage by means of a complementary recess in the first connecting member and protrusion on the second connecting member.

8. A jointing system as claimed in Claim 7, wherein the protrusion on the second connecting member is formed by an intermediate member having a protrusion at each end being engaged with a recess in said second connecting member.

9. A jointing system as claimed in Claim 7, wherein the recess in the first connecting member is formed by an intermediate member having a recess in each end and engaging with a protrusion on said first connecting member.

10. A jointing system as claimed in any one of the preceding Claims, wherein the connecting members engage one with another such that a hinge is formed between the panels allowing the panels to be pivoted relative to one another between a first position in which the panels are in end to end abutment and a second position wherein a desired angle is formed between them.

## Patentansprüche

1. Verbindungssystem mit ersten und zweiten Paneelen, von denen jedes längs eines Endabschnittes eine längliche Ausnehmung mit ungleichmäßigem Querschnitt aufweist, die eine Breite hat, welche im Inneren der Ausnehmung größer ist als an deren Öffnung, wobei die Ausnehmung von der Längs-Mittelebene des Paneels versetzt ist, und erste und zweite Verbindungsteile, von denen eines an jedem Paneel mittels eines ersten Abschnittes des Verbindungsteils montiert ist, der in der entsprechenden Ausnehmung durch die Ungleichmäßigkeit der Ausnehmung rückgehalten wird, wobei ein zweiter Abschnitt des ersten Verbindungsteils schwenkbar mit einem entsprechenden Abschnitt des zweiten Verbindungsteils zusammengreift.

2. Verbindungssystem nach Anspruch 1, bei dem die Längs-Mittelebene jeder Ausnehmung winklig zur Längs-Mittelebene des betreffenden Paneels angeordnet ist.

3. Verbindungssystem nach Anspruch 2, bei dem die Längs-Mittelebene jeder Ausnehmung unter einem Winkel zur Längs-Mittelebene des betreffenden Paneels angeordnet ist, der im Bereich von 30 bis 60 Grad liegt.

4. Verbindungssystem nach Anspruch 3, bei dem zwei Ausnehmungen in dem Endabschnitt jedes Paneels vorgesehen sind.

5. Verbindungssystem nach Anspruch 4, bei dem auf jeder Seite der Längs-Mittelebene des Paneels eine der zwei Ausnehumungen in dem Endabschnitt des Paneels angeordnet ist, wobei die Längs-Mittelebene jeder Ausnehmung unter einem Winkel von 45 Grad zur Längs-Mittelebene des Paneels angeordnet ist.

6. Verbindungssystem nach einem der vorhergehenden Ansprüche, bei dem der erste Abschnitt jedes Verbindungsteils einem T-förmigen Querschnitt und der zweite Abschnitt jedes Verbindungsteils einen kreisförmigen Querschnitt aufweist.

7. Verbindungssystem nach einem der vorhergehenden Ansprüche, bei dem die ersten und zweiten Verbindungsteile durch eine komplementäre Ausnehmung in dem ersten Verbindungsteil und einen Vorsprung am zweiten Verbindungsteil schwenkbar zusammengreifen.

8. Verbindungssystem nach Anspruch 7, bei dem der Vorsprung am zweiten Verbindungsteil aus einem Zwischenstück besteht, das an jedem Ende einen Vorsprung aufweist, der mit einer Ausnehmung in dem zweiten Verbindungsteil zusammengreift.

9. Verbindungssystem nach Anspruch 7, bei dem die Ausnehmung in dem ersten Verbindungsteil aus einem Zwischenstück besteht, das in jedem Ende eine Ausnehmung aufweist und mit einem Vorsprung am ersten Verbindungsteil zusammengreift.

10. Verbindungssystem nach einem der vorhergehenden Ansprüche, bei dem die Verbindungsteile derart miteinander zusammengreifen, daß zwischen den Paneelen ein Scharnier gebildet wird, derart, daß die Paneele zwischen einer ersten Position, in der die Enden der Paneele bündig gegeneinanderliegen, und einer zweiten Position, in der ein gewünschter Winkel zwischen ihnen besteht, relativ zueinander verschwenkbar sind.

**Revendications**

1. Système d'assemblage comprenant un premier et un deuxième panneaux dont chacun comporte, le long d'une partie d'extrémité, une rainure allongée de section transversale non uniforme qui a une largeur plus grande dans son intérieur qu'à son entrée, la rainure étant décalée du plan central longitudinal du panneau, et un premier et un deuxième connecteurs montés un sur chaque panneau par l'intermédiaire d'une première partie du connecteur qui est retenue dans la rainure correspondante du fait de la non uniformité de la rainure, une deuxième partie du premier connecteur pouvant s'accoupler de façon pivotante avec une partie correspondante du deuxième connecteur.

2. Système d'assemblage suivant la revendication 1, dans lequel le plan central longitudinal de chaque rainure est incliné par rapport au plan central longitudinal du panneau respectif.

3. Système d'assemblage suivant la revendication 2, dans lequel le plan central longitudinal de chaque rainure est incliné, par rapport au plan central longitudinal du panneau respectif, dans la plage de 30 à 60°.

4. Système d'assemblage suivant la revendication 3, dans lequel deux rainures sont prévues dans ladite partie d'extrémité de chaque panneau.

5. Système d'assemblage suivant la revendication 4, dans lequel les deux rainures de ladite partie d'extrémité du panneau sont disposées une de chaque côté du plan central longitudinal du panneau, le plan central longitudinal de chaque rainure étant incliné à 45° par rapport au plan central longitudinal du panneau.

6. Système d'assemblage suivant l'une quelconque des revendications précédentes, dans lequel la première partie de chacun des connecteurs a une section transversale en forme de T et la deuxième partie de chacun des connecteurs est de section transversale circulaire.

7. Système d'assemblage suivant l'une quelconque des revendications précédentes, dans lequel les premier et deuxième connecteurs s'accouplent de façon pivotante au moyen d'un emboîtement femelle ménagé dans le premier connecteur et d'une saillie complémentaire prévue sur le deuxième connecteur.

8. Système d'assemblage suivant la revendication 7, dans lequel la saillie sur le deuxième connecteur est formée par une pièce intermédiaire présentant à chaque extrémité une saillie qui s'engage dans un emboîtement prévu dans ledit deuxième connecteur.

9. Système d'assemblage suivant la revendication 7, dans lequel l'emboîtement dans le premier connecteur est formé par une pièce intermédiaire présentant un emboîtement dans chaque extrémité et qui s'accouple avec une saillie prévue sur ledit premier connecteur.

10. Système d'assemblage suivant l'une quelconque des revendications précédentes, dans lequel les connecteurs s'accouplent l'un avec l'autre de façon à constituer une charnière entre les panneaux, qui permet aux panneaux de pivoter l'un par rapport à l'autre entre une première position, dans laquelle les panneaux sont en butée bout-à-bout, et une deuxième position dans laquelle ils forment entre eux un angle désiré.

Fig 1

Fig 2

Fig 3

Fig 4

Fig 5

Fig 6